# EUROPEAN PATENT SPECIFICATION

(11) **EP 4 481 370 B1**
(45) Date of publication and mention of the grant of the patent: **18.11.2026**
(21) Application number: 23181276.9
(22) Date of filing: 23.06.2023
(51) Int. Cl.: G01N 21/39, G01N 21/3504, G01N 21/17

(54) **REMOTE IN-SITU ATMOSPHERIC POLLUTION MONITORING SYSTEM WITH OPEN OPTICAL PATH LASER ABSORPTION SPECTROSCOPY DEVICE**
SYSTEM ZUR ENTFERNTEN IN-SITU-ÜBERWACHUNG VON ATMOSPHÄRISCHER VERSCHMUTZUNG MIT LASERABSORPTIONSSPEKTROSKOPIEVORRICHTUNG MIT OFFENEM OPTISCHEM PFAD
SYSTÈME DE SURVEILLANCE DE POLLUTION ATMOSPHÉRIQUE IN SITU À DISTANCE AVEC DISPOSITIF DE SPECTROSCOPIE D'ABSORPTION LASER À TRAJET OPTIQUE OUVERT

(43) Date of publication of application: 25.12.2024
(73) Proprietor: Valstybinis Moksliniu Tyrimu Institutas Fiziniu Ir Technologijos Mokslu Centras, 02300 Vilnius (LT)
(72) Inventor: REMEIKIS, Vidmantas, 02300 Vilnius (LT); PLUKIS, Arturas, 02300 Vilnius (LT); BUTKUS, Laurynas, 02300 Vilnius (LT); EZERINSKIS, Zilvinas, 02300 Vilnius (LT); VAITEKONIS, Sarunas, 02300 Vilnius (LT); PLOTNIKOVAS, Arturas, 02300 Vilnius (LT); MACEIKA, Evaldas, 02300 Vilnius (LT); PLUKIENE, Rita, 02300 Vilnius (LT); URBA, Andriejus, 02300 Vilnius (LT)
(74) Representative: Draugeliene, Virgina Adolfina

(56) References cited:
- WO-A1-91/06471
- CN-A- 114 441 476
- CN-B- 104 132 911
- JP-A- 2016 050 813
- US-A1- 2022 082 495
- SOSKIND MICHAEL G. ET AL: "Stationary and drone-assisted methane plume localization with dispersion spectroscopy", REMOTE SENSING OF ENVIRONMENT., vol. 289, 1 May 2023 (2023-05-01), XX, pages 113513, XP093112155, ISSN: 0034-4257, DOI: 10.1016/j.rse.2023.113513

## Description

### Technical field to which invention relates

The invention relates to open optical path laser absorption spectroscopy in-situ measurement devices for gaseous CO/CO₂/NOₓ/CH₄/N₂O/SO₂ pollutants concentrations determination and evaluation of its dispersion in the atmosphere and the prediction of pollutants spread by using the system of two unmanned aerial vehicle (UAV) flying over the plume of pollutants and the ground station controlling and receiving the signals from flying system. The pollutants data recorded in the detector of the system of the flying UAV together with the GPS coordinates are sent online using a radio/GSM signal to the ground station equipped with a remote analyzer-computer. Both meteorological conditions and recorded concentrations profile data are analyzed, the spread of the pollution source is evaluated online according to pollutant dispersion parameters and a pollution forecast is provided.

### Background art

The nearest known environmental monitoring system according to the technical field is described in CN204855368 (U), priority 04.05.2015. The known atmospheric environmental monitoring system equipped with long-range laser consists of the movable ground system and high-altitude system, wherein the movable ground system includes set up of the light source (laser) equipment and the signal reception analytical equipment, while the high-altitude system includes the UAV with reflector set up. The laser source emits light of mid infrared (IR) of 3-5 µm to measure gaseous pollutants in the environment according to their absorption lines. The reflector on the UAV returns back the transmitted signal to analysis device of the ground system together with information on UAV altitude. System can realize remote non-contact atmospheric environment real-time supervision in several geometries (hovering at the same height in a circular or elliptical trajectory) depending on movability of terrestrial system with laser light source and repeating measurement steps by changing the positions of both the ground system and high- altitude system to cover the desired area (declared as medium-sized city) and find a location of pollution source. For such an application the power of the laser light source is greater than 1W.

Usually, in environmental pollution monitoring applications TDLAS (Tunable Diode Laser Absorption Spectroscopy) technology is used which is equipped with a narrow linewidth tunable semiconductor laser to satisfy width of the gas absorption line. The fundamental frequency absorption peaks of many hydrocarbon gases and toxic gases (such as CH₄, CO, NOx, SOx, etc.) are in the mid-infrared band of 3 to 5 µm, and the absorption of gases in this band is 2 to 3 orders of magnitude higher than that in the near-infrared band.

Disadvantages of the known apparatus are as follows: the known long-range laser atmospheric environmental monitoring system described in CN204855368 is substantially limited because one of the measurement system points is always on the ground and can only move where a motor vehicle can pass. Scanning concentrations of pollutants at different heights is basically not possible either, because, again, one of the measurement points always remains on ground. This substantially limits the spatial resolution of the measurement. In order to cover a substantial height of the atmospheric thickness, system uses long-distance scanning and IR light source greater than 1W, which could be dangerous for different species.

There is known a gas measuring device using flight vehicle described in JP 2016 050813 A, which discloses an open-path methane gas measuring device using two unmanned aerial vehicles (UAV)s. The emitting and reflecting parts of the optic system are attached to each of the two individual UAVs. The laser beam is aligned between the two UAVs by regulating the position of each of the two UAVs themselves**.**

There is known an apparatus, systems and methods for gas flux measurements with mobile platforms described in US 2022/082495 A1, which discloses an open-path laser spectroscopy system carried by two unmanned aerial vehicles (UAV)s, carrying an IR transciever and a retroreflector, respectively.

There is also known a highly elaborated optical system, "Stationary and drone-assisted methane plume localization with dispersion spectroscopy", Soskind et al., Remote Sensing of Environment 259 (2023) 113513.

The paper describes an open-path optic system consisting of two main parts: one is an elaborated optic system located on ground (it includes: IR transmitter, receiver, telescope, quadruple optic tracking sensor, a mirror directed by servo motor-actuated gimbal and many other optic components). Another end is one or several retroreflectors either fixed stationary or carried by an UAV.

The paper also describes the use of an optic tracking principle (including a quadruple sensor and a gimbal mirror) of the airborne retroreflector.

There is known a monitoring system for smart construction site environment, described in CN 114 441 476 A. It suggests using one or two UAVs for the open-path gaseous pollution monitoring around the construction site. In the case of two UAVs configuration, one UAV is carrying an IR transmitter and the other UAV is carrying the retroreflector. The angle of the retroreflector is adjustable, so that the reflective surface always faces the gas detection device.

### Technical problem to be solved

The present invention aims to improve the mobility and spatial resolution of measurements, also aims to use a low-power laser equipment which is energy-saving and not dangerous to different biological species.

### Disclosure of the invention

According to the invention there is provided a remote in-situ atmospheric pollution monitoring system with open optical path laser absorption spectroscopy device as defined in claim 1. Further developments of the invention are the subject of the dependent claims 2-5.

### Advantages of the invention

- Thanks to an automated and precise alignment of the optic system and coordinated flight of the two unmanned aerial vehicles (UAV) at a relatively small distance, moderate power of IR laser can be used in the range of 1 mW to 50 mW;
- invention offers unsurpassed mobility and spatial resolution of measurements of atmospheric gaseous molecular pollutants which detection requires a considerable length of the optical path;
- the system works remotely, in-situ, non-invasively and does not change the composition of the material;
- low power laser radiation is used which saves energy and is not dangerous to different biological species;
- different measurement algorithms depending on the current need can be accomplished by the feedback radio/GSM communication from ground station to the UAV system;
- not only CO/CO₂/NOₓ/CH4/N₂O/SO₂ concentration measurement is performed, but also source characterization: emission power and dispersion profile in a specific meteorological situation according to specialized measurement algorithms;
- measurements data can be used for the development of prognostic pollution models over potential CO/CO₂/NOₓ/CH₄/N₂O/SO₂ pollution sources.

### Brief description of drawings

Fig. 1A shows block diagram of the measurement system by a first example of implementing, which is outside the scope of the claimed invention.
Fig.1B shows block diagram of the of measurement system by a second example of implementing.
Fig. 2 shows the 1st stage - scheme of the rough search algorithm for the source location determination.
Fig 3 shows stage II - scheme of algorithm of the exact source search.
Fig. 4 shows scheme of the algorithm for determining the maximum pollution axes (vertical and horizontal) of the pollutant plume and emission power of the pollution source (view viewed downwind from the source).
Fig. 5A shows scheme of the algorithm for determining the parameters of the dispersion of pollutants in the atmosphere when the plume is relatively narrow one drone moves and scans the plume.
Fig. 5B shows scheme of the algorithm for determining the parameters of the dispersion of pollutants in the atmosphere: with a relatively wide plume drones in pair scans the plume.

### Examples implementing the invention

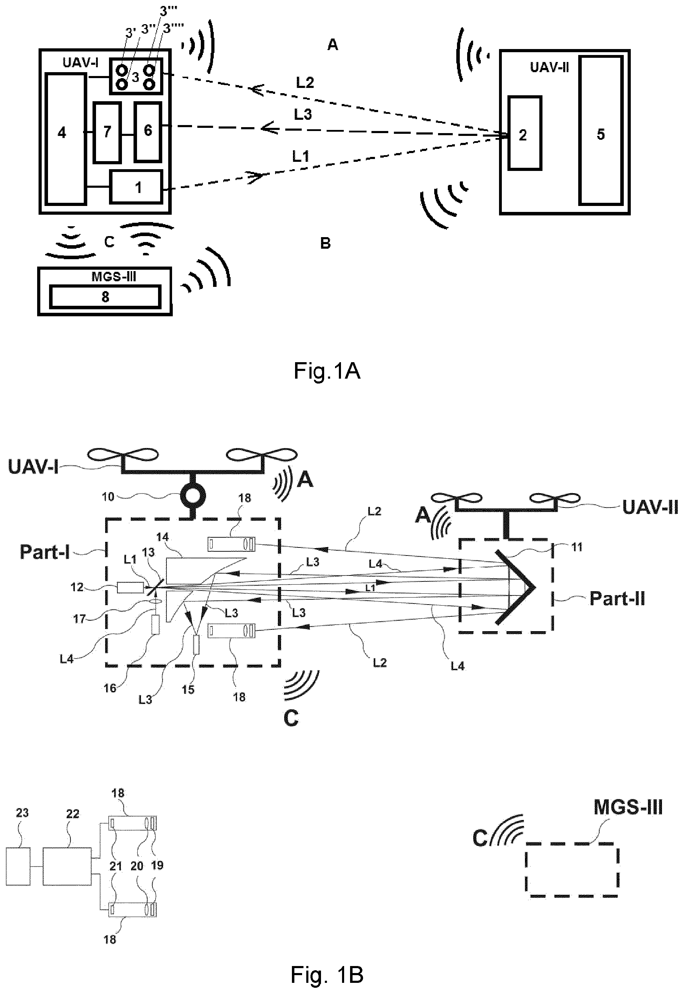

Outside the scope of the claimed invention, a system according to Fig. 1A is disclosed. The system (Fig.1A) comprises two unmanned aerial vehicles (UAV) i. e. a first unmanned aerial vehicle (UAV-I) and a second unmanned aerial vehicle (UAV-II) and a movable ground station III (MGS-III). The first UAV-I is larger and more powerful UAV, the second UAV-II is smaller. The first UAV-I is carrying a laser IR source 1 which is adjustable semiconductor IR laser and generates an IR light beam L1 in range of 3.1-6.12 µm (the absorption wavelength required for the corresponding gas detection), and which is configured to direct laser beam to a reflector 2 designed as a corner retroreflector equipped in the second UAV-II. The first UAV-I also is carrying a synchronization equipment 3 with four detectors 3', 3", 3‴ and 3ʺʺ, a power supply/control equipment 4 with integrated radio/GSM communication system; a telescope 6 and a detector 7 sensitive in the CO/CO₂/NOₓ/CH₄/N₂O/SO₂ wavelength range (photodiode with pre-amplifier, e.g. Lms43PD-05-CG-R-PA). The second UAV-II is also carrying a power supply/control equipment 5 with integrated radio/GSM communication system. The movable ground station MGS-III is carrying a computer 8 configured to control and to collect and analyze data for both UAV-I and UAV-II and has integrated radio/GSM communication system.

Block diagram of the measurement system (Fig.1A) shows optically linked optical systems arranged in the first UAV-I and the second UAV-II by laser beams (L1-L3) and the MGS-III communicates via radio/GSM feedback (A, B, C). UAV-I carries the laser source 1 which is adjustable semiconductor IR laser and generates a narrow IR light beam L1 directing it through a thickness of air between the UAV-I and UAV-II into the retroreflector 2 of UAV-II. The returning IR beam from the retroreflector 2 once again passes the thickness of air between the optic systems of UAV-I and UAV-II. The backscattered L2 to UAV-I synchronization equipment 3, which allows to synchronize the first UAV-I and the second UAV-II optic systems via radio signal A of power/control and communication modules 4 and 5 of each of UAV-I and UAV-II respectively and synchronized UAV system are able to target pollution determined backscattered IR beam L3 to the telescope 6 which directs the beam to the detector 7 with preamplifier. By tuning the wavelengths of laser 1, the absorption of IR light by molecular pollutants in air between UAV-I and UAV-II are scanned and pollutant concentrations evaluated, thus we call this IR light beam a scanning beam. The registered signals data subsequently is analyzed by power/control and communication module (4) and data is transmitted to MGS-III data collection- analysis computer (8) remotely via radio/GSM communication (C).

The proposed system in Fig.1B shows an example of implementing of the invention.

In the realisation shown in Fig.1B, the proposed optic system comprises three main parts: a high-altitude optic system Part-I, a high-altitude optic system part-II and a movable ground station MGS-III.

The high-altitude optic system Part-I is attached to a first unmanned aerial vehicle UAV-I by means of a flexible motor-actuated mechanism 10. The said mechanism 10 is able to direct the optic Part-I into different directions similarly as the mechanisms of moving head for scenic lighting.

The high-altitude optic system Part-II is firmly attached to a second unmanned aerial vehicle UAV-II which one is somewhat smaller than the first UAV-I. The optic system Part -II includes a reflector which is in fact a corner retroreflector 11.

The first UAV-I and the second UAV-II are sharing their GPS data of 3D position, heading and attitude by radio communication and coordinate their movement together. The optic system Part-I is sending pollutant gas measurement data to the ground station MGS-III and the first UAV-I and the second UAV-II are receiving the commands from the ground station MGS-III for general movement according to one of the suggested research algorithms for identification and characterization of the pollution sources. (The said algorithms will be discussed further).

The optic system Part-I includes a tuneable semiconductor IR laser 12 which generates a narrow IR light beam L1 and sends it through a pure silicon plate 13 and through a central hole in the parabolic mirror 14 into the retroreflector 11. The returning IR beam L3 once again passes the thickness of air between the optic system Part-I and Part-II and is directed and focused by the telescope 14 in the form of parabolic mirror into the IR light detector 15. By tuning the wavelengths of laser 12, the absorption of IR light by molecular pollutants in air between optic system Part-I and optic system Part-II are scanned by scanning beam L1+L3 and pollutant concentrations are evaluated, thus we call this IR light beam a scanning beam. In addition to the scanning IR light beam L3, a laser 16 in the optic system Part-I generates a wide laser-guidance beam L4 of visible light, preferably of red light which is only partly collimated by the collimator 17 and further is allowed to spread widely. The laser- guidance beam L4 is at 90° angle reflected by the silicon plate 13 and, coaxially with the scanning IR beam L1, is sent through the hole in the parabolic mirror 14 towards the retroreflector 11. As long as the guidance beam L4 spreads wide, it covers substantially wider area than the size of the retroreflector 11 (the farthermost edges of this beam are not shown in Fig.1B). This circumstance provides the space for the manoeuvre for both UAVs and both optic system parts Part I and Part II, so that the laser guidance system is still able to correct all parts into the aligned and bound position.

Note that the plate made with silicon material has got a unique property of almost 100 percent transmitting IR light and almost 100 percent reflecting visible red light while at 45° angle.

The returning laser guidance beam L2 hits the segments 18 of the four-segment light direction tracker which is sensitive to the direction from which the light is received. The four segments 18 are located in a quadrate around the parabolic mirror 14. Only two of the segments 18 are seen on Fig.1 because other two are behind them.

Each of the four identical segments 18 is in essence a collimator with a spectral red filter 19 and a lens 20 at an inlet of the each segment 18 and light detectors 21 at an end of the each segment 18. The spectral filters prevent the collimators from entering ambient light except of the guidance laser light and the lenses direct the guidance light into light detectors at the end.

Each of the four segments 18 are sending electric signals to the electronic circuitry 22 which, altogether, generates the digital signals proportional to the deviation of optic system Part-II from the main axis of Part-I in both vertical and horizontal aspects. The said signals are further sent into the computer 23 of UAV-I which, according to the dedicated algorithm, generates signals for the drivers of motors of the mechanical directing system 10 to adjust the system into the correct (precisely aligned) position.

In order to additionally prevent the blinding of the laser guidance system by ambient light, the visible laser 16 is amplitude-modulated and the signals obtained by the circuitry of the light direction tracker are synchronously demodulated at a certain frequency, preferably at 120 Hz or higher.

It is critically important that the scanning IR beam L1 from the optic system Part-I (note this beam is the narrow one) hits the retroreflector 11 of the optic system part-I and returns back. Therefore, the direction of Part-I is to be kept the most precisely. The retroreflector 11 has got a property of reflecting the beams back in the same direction as they arrived, not regarding the direction of the retroreflector 11 itself, which can rotate over a wide angle. Therefore, it is sufficient to turn the retroreflector 11 towards the system Part-I approximately. This is done by properly navigating the UAV-II according to the GPS signals of both UAVs.

Also note that both scanning IR beam L1 and the guidance beam L4 are reflected by the same retroreflector 11, however, they do not interfere with each other because they belong to different spectral ranges and are detected by different detectors.

Close coordination and laser guidance of the optic system Part-I along with Part-II and relatively small distance between them (our tested distance is from 5 to 15 meters and also can be longer), together with the focusing of the beam by a telescope enables the use of a narrow-beam IR tuneable semiconductor laser which is of relatively low power (within 10 mW) which, in turn, enables to build a relatively lightweight optic system of Part-I and to make it portable by means of a UAV vehicle. (Note for comparison, that the device of a patent CN204855368 (U) requires a laser of more than 1 W and only considers bringing it by a ground motor vehicle).

Carrying of both optic system parts Part-I and Part-II by air, in turn, provides an ultrahigh mobility and a possibility to investigate any suspected source of pollution in high spatial and temporal resolution.

The examples of the UAV vehicle applications for the pollution source identification and characterization are given below.

The device of UAV system not only measures CO/CO₂/NOₓ/CH₄/N₂O/SO₂ concentrations, but can also determine the pollutants emission source location in the atmosphere (point, multi-point or diffusion in 3D space) by compiling measurement results received from UAV-I and performing the feedback measurements of source location determination according to algorithm. The source spatial location algorithm consists of two stages: I) rough location determination; II) accurate positioning.

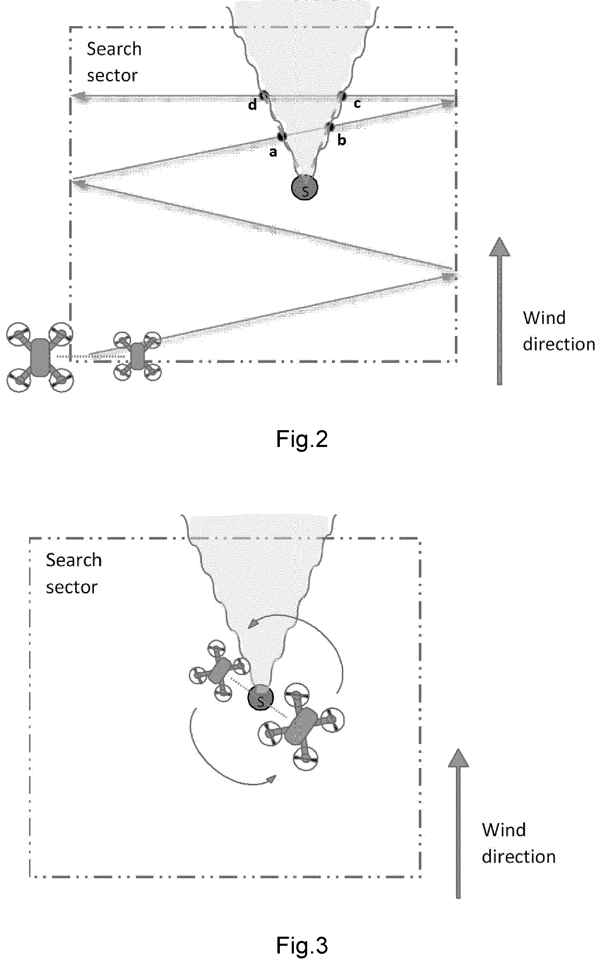

The UAV system fly in a single horizontal plane at a selected distance L between them, which is chosen based on the desired accuracy and expected emissions concentration. A rectangular horizontal search sector and altitude in the space are selected. Wind direction is determined. A system of UAV flies in the search sector in a zigzag manner, maintaining their mutual position so that the wind blows perpendicular to the axis of their pair (see Figure 2).

According to the change in the value of the recorded optical signal (concentration above the background or ½ of the maximum concentration), the edge points (a, b, c and d) of the pollutant plume are determined. Imaginary lines are drawn in space through paths of plume edges (a and b and c and d), and the point of intersection of these lines S will approximately point to the pollution source position in the plain.

At the stage of exact determination, the source location the UAV fly to the previously roughly identified centre S of the pollution source and begin to rotate in a circular trajectory around the source (fixing the centre of rotation of the drones above the suspected source (see Figure 3) or positioning one of the UAV in the suspected centre of the pollution source). The location of the pollution source can be determined more precisely by processing measured signal mathematically taking into account the change in the amplitude of the received signal and the shape of the signal.

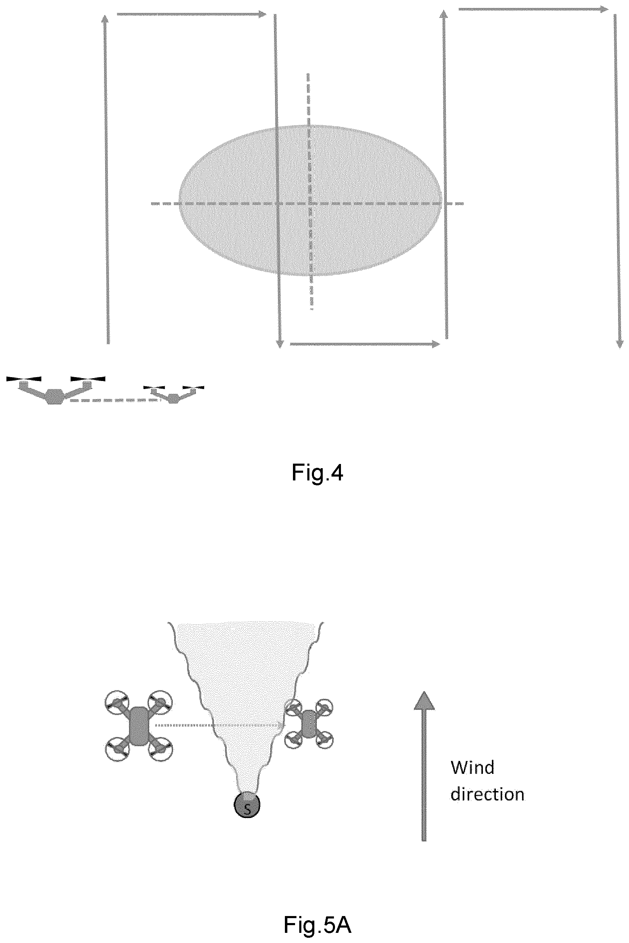

In order to determine the elevation of the emission source the device with UAV system performs measurements perpendicular to the direction of wind and finds the central axis of the propagation profile of the plume. The drones fly downwind behind the pollutant source (within distance P) and sequentially scan the space in a vertical plane perpendicular to the wind direction (see Fig. 4). The maximum signal during scanning indicates that at certain moment the axis of maximum concentration of the plume is crossed (horizontal, and when scanning along the previously determined horizontal axis, the vertical axis is also determined).

The emission rate (power) from the source is assessed by scanning and integrating signal in the sector (see Fig. 4) sequentially with non-overlapping trajectories. After calibrating the integral according to the standard, the absolute power of the source pollutants (gases or aerosols) emitted into the atmosphere is determined.

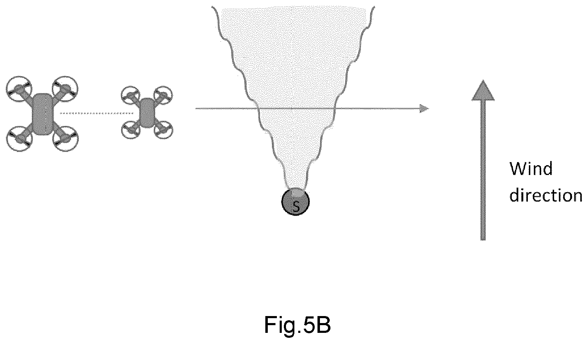

The device can determine the dispersion parameters (dispersion values) of pollutants released into the atmosphere in a specific meteorological situation based on received and compiled data by ground station computer and by performing feedback measurements according to algorithm for determination of parameters of pollutant dispersion in the atmosphere transmitted to UAV-I and UAV-II system via radio/GSM connection. Contaminants are assumed to dilute approximately according to Gauss's law during diffusion. UAV-I and UAV-II scan in a vertical plane downwind of the source perpendicular to the wind direction (see Fig. 5). If the plume is not very wide and covered, the drones scan by changing the optical communication distance between them (see Fig. 5 A). The signal path differential will be a Gaussian function for which the sigma values σ_{y}, σ_{z} can be approximated (determined).

If the plume is quite wide and is not covered by the maximum optical communication length of the drones, then the drones scan by flying in pairs (see Fig. 5 B). In this case, the signal path differential will be close to a Gaussian function (especially if the drones are relatively close to each other), for which approximate sigma values σ_{y}, σ_{z} can be approximated (determined).

The device with UAV system performs measurements downwind at the wind propagation speed thereby levelling out non-uniform, unstable emissions in time. The device with UAV system performs measurements in series while the pollutant emission and dispersion parameters are obtained with sufficient accuracy.

The device with UAV system performs measurements of concentrations, estimates characteristics of the pollution source(s) and determines parameters of atmospheric dispersion of pollutants which could be used latter on to develop prognostic pollution models from potential CO/CO₂/NOₓ/CH₄/N₂O/SO₂ pollution sources or to adapt the data for global transport model of pollution in the atmosphere.

## Claims

1. A remote in-situ atmospheric pollution monitoring system with open optical path laser absorption spectroscopy device comprising a high-altitude optic system arranged in two unmanned aerial vehicles (UAV), said high-altitude optic system including a first unmanned aerial vehicle UAV-I and a second unmanned aerial vehicle UAV-II,
and a movable ground system MGI-III carrying a signal receiving and analyzing device, wherein said systems are interconnected via contactless communication,
wherein the high-altitude optic system comprises two separate optic system parts: a first optic system part Part-I and a second optic system part Part-II attached to the first UAV-I and to the second UAV-II respectively and interconnected by optical signals and radio signals with the MGS-III, wherein
the Part-I is attached to the first UAV-I flexibly with a possibility to direct the Part-I into different directions by a motor-actuated and regulated mechanism (10) according to control signals received in it, and
the Part-II is attached to a second UAV-II rigidly,
said Part-I comprises an infrared, IR, laser light source (12), a silicon plate (13), a telescope (14) and a detector (15),
the Part-II comprises a retroreflector (11), wherein
the IR laser light source (12) is configured for generating an IR light beam (L1) and forwarding it through the silicon plate (13) and the telescope (14), which is configured as a parabolic mirror with a central hole, into the retroreflector (11), which is configured to reflect the IR light beam (L1) and to direct a reflected beam (L3) to the telescope (14) focusing it on the detector (15),
the first UAV-I and second UAV-II are provided with GPS and are sharing their GPS data of 3D position, heading and attitude by radio communication and are able to coordinate their movement together,
the high-altitude optic system is provided with a laser guidance system comprising:
a visible laser (16) generating a wide guidance beam (L4) within the Part-I which through a collimator (17) is directed to the silicon plate (13) configured to reflect the guidance beam (L4) at 90° and to direct it through the telescope (14) to the retroreflector (11) of the Part-II which is configured for reflecting back and forwarding a reflected guidance beam (L2) to a light direction tracker arranged in the Part-I comprising four segments (18), configured for detecting the reflected guidance beam (L2),
each of the segments (18) is provided with a spectral filter (19) and a lens (20) at its inlet and an optic detector (21) at its end,
said detectors (21) are configured to direct electric signals from the detectors (21) into the dedicated circuity (22) which is configured to generate digital signals proportional to the system deviation in horizontal and vertical plain and to send said signals to a computer (23) of the Part-I, said computer (23) is configured to send control signals to the motor-actuated and regulated mechanism (10) for aligning a direction of the Part-I .

2. The system according to claim 1, wherein the IR laser light source-(12) is a semiconductor tuneable IR laser.

3. The system according to claim 2, wherein the semiconductor tuneable IR laser (12) is configured to generate the IR light beam (L1) which power is in the range from 1 mW to 50 mW**.**

4. The system according to any of claims 1-3, wherein the retroreflector (11) is a corner retroreflector.

5. The system according to-any of claims 1-4, wherein the guidance laser (16) is amplitude-modulated and the signals obtained by the circuitry of light direction tracker are synchronously demodulated at certain frequency, preferably at 120 Hz or higher.

## Patentansprüche

1. System zur Entfernten In-Situ-Überwachung von atmosphärischer Verschmutzung mit Laserabsorptionsspektroskopievorrichtung mit offenem optischem Pfad, umfassend ein in zwei unbemannten Luftfahrzeugen (UAV) angeordnetes optisches Höhensystem, wobei das optische Höhensystem ein erstes unbemanntes Luftfahrzeug UAV-I und ein zweites unbemanntes Luftfahrzeug UAV-II sowie ein bewegliches Bodensystem MGS-III mit einer Vorrichtung zum Empfangen und Analysieren von Signalen umfasst, wobei die Systeme über eine kontaktlose Kommunikation miteinander verbunden sind, wobei
das optische Höhensystem zwei getrennte optische Systemteile umfasst: einen ersten optischen Systemteil Part-I und einen zweiten optischen Systemteil Part-II, die am UAV-I bzw. am UAV-II befestigt und durch optische Signale miteinander sowie durch Funksignale mit dem MGS III verbunden sind, wobei
der Part-I am ersten UAV-I beweglich befestigt ist, sodass der Part-I durch einen motorisch betätigten und geregelten Mechanismus (10) entsprechend den darin empfangenen Steuersignalen in verschiedene Richtungen ausgerichtet werden kann, und
der Part-II an einem zweiten UAV-II starr befestigt ist,
der Part-I eine Infrarot-Laserlichtquelle (IR-Laserlichtquelle) (12), eine Siliziumplatte (13), ein Teleskop (14) und einen Detektor (15) umfasst,
der Part-II den Retroreflektor (11) umfasst, wobei
die IR-Laserlichtquelle (12) dazu eingerichtet ist, einen IR-Lichtstrahl (L1) zu erzeugen und ihn durch die Siliziumplatte (13) und das als Parabolspiegel mit einer zentralen Öffnung ausgebildete Teleskop (14) in den Retroreflektor (11) zu leiten, der dazu eingerichtet ist, den IR-Lichtstrahl (L1) zu reflektieren und einen reflektierten Strahl (L3) auf das Teleskop (14) zu richten, das ihn auf einen Detektor (15) fokussiert,
das erste UAV-I und das zweite UAV-II mit GPS ausgestattet sind, ihre GPS-Daten zur 3D-Position, zum Kurs und zur Fluglage über Funkkommunikation austauschen und ihre Bewegung gemeinsam koordinieren können,
das optische Höhensystem mit einem Laserführungssystem ausgestattet ist, das Folgendes umfasst:
einen Laser (16) im sichtbaren Spektralbereich, der innerhalb des Part-I einen breiten Führungsstrahl (L4) erzeugt, der durch einen Kollimator (17) auf die Siliziumplatte (13) gerichtet wird, die dazu eingerichtet ist, den Führungsstrahl (L4) um 90° zu reflektieren und ihn durch das Teleskop (14) auf den Retroreflektor (11) des Part-II zu richten, der dazu eingerichtet ist, einen reflektierten Führungsstrahl (L2) zurückzureflektieren und zu einer im Part-I angeordneten Lichtstrahlrichtungs-Nachführeinrichtung zu leiten, die vier Segmente (18) umfasst, die dazu eingerichtet sind, den reflektierten Führungsstrahl (L2) zu erfassen,
jedes der Segmente (18) an seinem Eingang mit einem Spektralfilter (19) und einer Linse (20) und an seinem Ende mit einem optischen Detektor (21) versehen ist,
die Detektoren (21) dazu eingerichtet sind, elektrische Signale von den Detektoren (21) an eine zugehörige Schaltung (22) zu leiten, die dazu eingerichtet ist, digitale Signale zu erzeugen, die proportional zur Abweichung des Systems in der horizontalen und vertikalen Ebene sind, und diese Signale an einen Computer (23) des Part-I zu senden, wobei der Computer (23) dazu eingerichtet ist, Steuersignale an den motorisch betätigten und geregelten Mechanismus (10) zu senden, um die Richtung des Part-I auszurichten.

2. System nach Anspruch 1, wobei die IR-Laserlichtquelle (12) ein abstimmbarer Halbleiter-IR-Laser ist.

3. System nach Anspruch 2, wobei der abstimmbare Halbleiter-IR-Laser (12) dazu eingerichtet ist, den IR-Lichtstrahl (L1) zu erzeugen, dessen Leistung im Bereich von 1 mW bis 50 mW liegt.

4. System nach einem der Ansprüche 1-3, wobei der Retroreflektor (11) ein Eckretroreflektor ist.

5. System nach einem der Ansprüche 1-4, wobei der Führungslaser (16) amplitudenmoduliert ist und die von der Schaltung der Lichtstrahlrichtungs-Nachführeinrichtung erhaltenen Signale bei einer bestimmten Frequenz, vorzugsweise bei 120 Hz oder höher, synchron demoduliert werden.

## Revendications

1. Système de surveillance de la pollution atmosphérique in situ à distance avec un dispositif de spectroscopie d'absorption laser à trajet optique ouvert, comprenant un système optique à haute altitude disposé dans deux véhicules aériens sans pilote (UAV), ledit système optique à haute altitude comprenant un premier véhicule aérien sans pilote UAV-I et un second véhicule aérien sans pilote UAV-II, ainsi qu'un système au sol mobile MGS-III portant un dispositif de réception et d'analyse de signaux, lesdits systèmes étant interconnectés par une communication sans contact, dans lequel
le système optique à haute altitude comprend deux parties distinctes de système optique : une première partie de système optique Part-I et une seconde partie de système optique Part-II, fixées respectivement à l'UAV-I et à l'UAV-II et interconnectées par des signaux optiques, ainsi que par des signaux radio avec le MGS III, dans lequel
la Part-I est fixée de manière mobile au premier UAV-I, avec la possibilité d'orienter la Part-I dans différentes directions au moyen d'un mécanisme (10) actionné par un moteur et régulé en fonction des signaux de commande qu'il reçoit, et
la Part-II est fixée de manière rigide à un second UAV-II,
ladite Part-I comprend une source de lumière laser infrarouge, IR, (12), une plaque de silicium (13), un télescope (14) et un détecteur (15),
la Part-II comprend le rétroréflecteur (11), dans lequel
la source de lumière laser IR (12) est configurée pour générer un faisceau lumineux IR (L1) et le transmettre à travers la plaque de silicium (13) et le télescope (14), qui est réalisé sous la forme d'un miroir parabolique avec un trou central, vers le rétroréflecteur (11), qui est configuré pour réfléchir le faisceau lumineux IR (L1) et diriger un faisceau réfléchi (L3) vers le télescope (14), lequel le focalise sur un détecteur (15),
le premier UAV-I et le second UAV-II sont équipés d'un GPS, partagent par communication radio leurs données GPS de position 3D, de cap et d'attitude et sont capables de coordonner leurs mouvements ensemble,
le système optique à haute altitude est équipé d'un système de guidage laser comprenant :
un laser visible (16) générant un large faisceau de guidage (L4) à l'intérieur de la Part-I, lequel est dirigé, par l'intermédiaire d'un collimateur (17), vers la plaque de silicium (13), configurée pour réfléchir le faisceau de guidage (L4) à 90° et le diriger à travers le télescope (14) vers le rétroréflecteur (11) de la Part-II, qui est configuré pour réfléchir en retour et transmettre un faisceau de guidage réfléchi (L2) à un dispositif de suivi de la direction lumineuse disposé dans la Part-I, comprenant quatre segments (18) configurés pour détecter le faisceau de guidage réfléchi (L2),
chacun des segments (18) est équipé d'un filtre spectral (19) et d'une lentille (20) à son entrée, et d'un détecteur optique (21) à son extrémité,
lesdits détecteurs (21) sont configurés pour transmettre des signaux électriques provenant des détecteurs (21) à un circuit dédié (22), qui est configuré pour générer des signaux numériques proportionnels à l'écart du système dans les plans horizontal et vertical et pour envoyer lesdits signaux à un ordinateur (23) de la Part-I, ledit ordinateur (23) étant configuré pour envoyer des signaux de commande au mécanisme (10) actionné par un moteur et régulé afin d'aligner une direction de la Part-I.

2. Système selon la revendication 1, dans lequel la source de lumière laser IR (12) est un laser IR à semi-conducteur accordable.

3. Système selon la revendication 2, dans lequel le laser IR à semi-conducteur accordable (12) est configuré pour générer le faisceau lumineux IR (L1), dont la puissance est comprise entre 1 mW et 50 mW.

4. Système selon l'une quelconque des revendications 1 à 3, dans lequel le rétroréflecteur (11) est un rétroréflecteur en coin.

5. Système selon l'une quelconque des revendications 1 à 4, dans lequel le laser de guidage (16) est modulé en amplitude et les signaux obtenus par le circuit du dispositif de suivi de la direction lumineuse sont démodulés de manière synchrone à une certaine fréquence, de préférence à 120 Hz ou plus.
